# EUROPÄISCHE PATENTSCHRIFT

(11) **EP 3 596 363 B1**
(45) Veröffentlichungstag und Bekanntmachung des Hinweises auf die Patenterteilung: **18.05.2022**
(21) Anmeldenummer: 18710418.7
(22) Anmeldetag: 07.03.2018
(51) Int. Cl.: F16J 15/16, F16J 15/3204, F16J 15/3212, F16J 15/3216, F16J 15/3232, F16J 15/3208

(54) **DICHTUNGSANORDNUNG**
SEAL ASSEMBLY
ENSEMBLE D'ÉTANCHÉITÉ

(30) Priorität: 16.03.2017 DE 102017204374
(43) Veröffentlichungstag der Anmeldung: 22.01.2020
(73) Patentinhaber: Trelleborg Sealing Solutions Germany GmbH, 70565 Stuttgart (DE)
(72) Erfinder: JORDAN, Holger, 73765 Neuhausen a.d.F. (DE); WILKE, Mandy, 71034 Böblingen (DE)
(74) Vertreter: Kohler Schmid Möbus Patentanwälte
(86) Internationale Anmeldenummer: PCT/EP2018/055600
(87) Internationale Veröffentlichungsnummer: WO 2018/166863

(56) Entgegenhaltungen:
- DE-A1- 19 906 733
- DE-A1-102014 214 684
- US-A- 4 067 584

## Beschreibung

Die Erfindung betrifft eine Dichtungsanordnung mit einem ersten und mit einem zweiten Maschinenelement, die unter Ausbildung eines zwischen den beiden Maschinenelementen angeordneten Dichtspalts voneinander beabstandet angeordnet und entlang/um eine Bewegungsachse relativ zueinander bewegbar sind. Zum Abdichten einer druckbeaufschlagbaren Hochdruckseite des Dichtspalts gegenüber einer Niederdruckseite des Dichtspalts dient eine Dichtung. Die Dichtungsanordnung umfasst dabei einen Stützring für die Dichtung.

Derlei Dichtungsanordnungen haben sich in der Praxis bei einer Vielzahl von technischen Anwendungen etabliert und sind bei Kolben-Zylindereinheiten, etwa für hydraulische Anwendungen, ebenso zu finden, wie bei Antriebswellen. Ähnliche Dichtungen sind aus US 4 067 584 A, DE 199 06 733 A1, DE 10 2014 214684 A1, DE 20 2016 102691 U1 und JP 2005 023966 A bekannt.

Die Dichtungsanordnungen müssen bei geringen Fertigungskosten immer höheren Anforderungen an die Dichtheit und die Lebensdauer der eingesetzten Dichtung gerecht werden. Es ist deshalb die Aufgabe der Erfindung, eine besonders einfache aber dabei hochbelastbare und kostengünstig zu fertigende Dichtungsanordnung anzugeben.

Die die Dichtungsanordnung betreffende Aufgabe wird durch eine Dichtungsanordnung mit den in Anspruch 1 angegebenen Merkmalen gelöst. Weiterbildungen der Erfindung sind in den Unteransprüchen sowie in der Beschreibung angegeben.

Die erfindungsgemäße Dichtungsanordnung zeichnet sich dadurch aus, dass der Stützring eine zur Hochdruckseite weisende erste Seitenflanke aufweist, die zur Hochdruckseite H hin zumindest abschnittsweise konvex gekrümmt oder die zumindest abschnittsweise relativ zur Bewegungsachse unter einem spitzen Winkel α, β schräg verlaufend angeordnet ist. Die Dichtung weist einen Halteabschnitt und zumindest eine Primärdichtlippe auf, die sich von dem ersten Halteabschnitt wegerstreckt und welche an einer Dichtfläche des zweiten Maschinenelements dynamisch dichtend anliegt. Die Primärdichtlippe liegt niederdruckseitig über einen Großteil ihrer Längserstreckung an der ersten Seitenflanke des Stützrings unmittelbar an und ist an dieser Seitenflanke des Stützrings unmittelbar abgestützt. Der Halteabschnitt der Dichtung ist zwischen dem Stützring und dem ersten Maschinenelement im radialen Presssitz gehalten angeordnet und liegt am ersten Maschinenelement mittelbar oder unmittelbar statisch dichtend an.

Die erfindungsgemäße Dichtungsanordnung ist kostengünstig herzustellen und zu montieren. Die Dichtung weist ein hohes Dichtvermögen auf. Dadurch, dass die Primärdichtlippe über einen Großteil, bevorzugt mit mehr als 80%, ihrer Längserstreckung an der ersten Seitenflanke des Stützrings unmittelbar anliegt und an dieser niederdruckseitig abgestützt ist, kann die Primärdichtlippe während des Betriebseinsatzes zuverlässig vor einer mechanischen bzw. thermischen Überbeanspruchung geschützt werden. Einerseits ist durch den Stützring eine zuverlässige Abstützung in Richtung auf die Niederdruckseite und damit ein Verformungsschutz der Primärdichtlippe bei Druckbeaufschlagung der Hochdruckseite H der Dichtungsanordnung gewährleistet. Einer Extrusion der Primärdichtlippe in den Dichtspalt hinein kann dadurch zuverlässig entgegengewirkt werden. Durch die in axialer sowie in radialer Richtung verlaufend angeordnete Primärdichtlippe kann diese im Falle einer radial dichtenden Dichtung (= Radialdichtring) eine Exzentrizität der beiden Maschinenelemente bzw. im Falle einer axial dichtenden Dichtung auch gerichtete Relativbewegungen der beiden Maschinenelemente begrenzt ausgleichen bzw. kompensieren, ohne dass es dadurch zu einer Beeinträchtigung der Dichtfunktion der Dichtung kommt. Durch den Stützring kann dabei einer übermäßigen und damit verschleißträchtigen Kontaktflächenpressung der Dichtung bzw. der Dichtkante und der Dichtfläche entgegengewirkt werden, indem das zweite Maschinenteil den Stützring bei einer radial dichtenden Dichtung in radialer Richtung und bei einer axial dichtenden Dichtung in axialer Richtung mitnimmt. Dadurch, dass die erste Seitenflanke des Stützrings zur Hochdruckseite H hin nach außen gekrümmt oder von der Niederdruckseite N in Richtung auf die Hochdruckseite H zur Dichtfläche schräg verlaufend ausgeführt ist, kann die Primärdichtlippe im Kontaktflächenbereich mit der Dichtfläche, bzw.

im Bereich ihrer Dichtkante, zuverlässig entlastet werden. Auch kann durch den Stützring eine übermäßige Kontaktflächenpressung bei Druckbeaufschlagung der Hochdruckseite des Dichtspalts mit einem großen oder sehr großen Betriebsdruck verhindert werden, weil durch den Stützring eine übermäßige Verformung der Primärdichtlippe in Richtung auf und gegen die Dichtfläche des zweiten Maschinenelements begrenzt ist.

Der Stützring kann nach einer Ausführungsform der Erfindung im Normalbetrieb der Dichtungsanordnung vom zweiten Maschinenelement beabstandet angeordnet sein. Bei einer in radialer Richtung dynamisch dichtenden Dichtung führt dadurch eine geringfügige Exzentrizität eines oder beider Maschinenelemente und im Fall einer in axialer Richtung dynamisch dichtenden Dichtung geringfügige axiale Relativbewegungen nicht unmittelbar bzw. sofort zu einer Kontaktierung des Stützrings durch das die Dichtfläche aufweisende Maschinenelement.

Liegt der Stützring nach einer alternativen Ausführungsform der Erfindung am zweiten Maschinenelement unmittelbar an, so kann dadurch ein besonders feinfühliges Ansprechverhalten des Stützrings auf eine Exzentrizität bzw. auf eine axiale Relativbewegung der Maschinenelemente und damit ein besonders zuverlässiger Schutz der Primärdichtlippe vor einer mechanischen/thermischen Überbeanspruchung erreicht werden. Durch einen solchen dauerhaften Kontakt des Stützrings mit der Dichtfläche kann die Dichtung zudem selbst bei Hoch- und Höchstdruckanwendungen der Dichtungsanordnung zuverlässig vor einem Blowby bzw. einer unerwünschten Extrusion in den Dichtspalt geschützt werden.

Der Stützring kann erfindungsgemäß an seiner der Dichtfläche des zweiten Maschinenelements zuweisenden Seite Tribostrukturen aufweisen. Durch derlei Tribostrukturen kann einerseits das Rückfördervermögen, d. h. das sogenannte Rückschleppvermögen, der Dichtungseinrichtung bezüglich von der Hochdruckseite H auf die Niederdruckseite N der Primärdichtlippe gelangtem Fluid verbessert werden. Zugleich kann dadurch die Schmierung und Kühlung der Dichtlippe im Kontaktflächenbereich mit der Dichtfläche weiter verbessert werden. Zu beachten ist, dass die Tribostrukturen bei einer (in radialer Richtung) innendichtenden Radialdichtung an deren Innenumfangsseite und bei einer (in radialer Richtung) außendichtenden Radialdichtung an deren Außenumfangsseite angeordnet sind. Bei einer Axialdichtung sind die Tribostrukturen an der Ober- oder Unterseite der Dichtung angeordnet.

Nach einer bevorzugten Weiterbildung der Erfindung ist der Stützring oder die Dichtung mit einem Profilvorsprung versehen, der sich vom Stützring bzw. der Dichtung weg und in eine zum Profilvorsprung korrespondierende Ausnehmung des jeweilig anderen Bauteils hineinerstreckt. Dadurch kann die Dichtung mit dem Stützring drehfest verkoppelt und gegenüber einem unerwünschten Abrutschen vom Stützring gesichert werden. Dies ist für die Betriebssicherheit der Dichtungsanordnung von Vorteil und ermöglicht eine weiter vereinfachte Montage der Dichtungsanordnung. Der Profilvorsprung kann form- und/oder kraftschlüssig in der Ausnehmung gehalten angeordnet sein. Besonders bevorzugt weisen der Stützring und/oder Dichtring mehrere solcher Profilvorsprünge und Ausnehmungen auf. Die Profilvorsprünge sind dabei vorzugsweise in Umfangsrichtung der Dichtung voneinander beabstandet angeordnet. Die Profilvorsprünge können auch in mehreren Reihen zueinander versetzt am Stützring bzw. an der Dichtung angeordnet sein. Der Stützring kann alternativ auch Profilvorsprünge aufweisen, die in Form von Krallelementen ausgeführt sind, die sich in das Material der Dichtung einkrallen. Die Dichtung muss dadurch keine vorkonfektionierten Ausnehmungen für die Profilvorsprünge aufweisen, wodurch die Fertigungskosten reduziert und die Montage der Dichtungsanordnung weiter vereinfacht werden kann. Die als Krallelemente ausgebildeten Profilvorsprünge des Stützrings können dabei verdrängend oder aber unter einer lokalen Zerstörung des Dichtungsmaterials, d. h. eines Einschneidens der Krallelemente in das Material der Dichtung, in die Dichtung eingreifen. Die Profilvorsprünge können nach der Erfindung insbesondere spitzkegelig oder auch pyramidenförmig ausgeführt sein.

Die Dichtung kann erfindungsgemäß eine Sekundärdichtlippe oder eine Abstreiflippe umfassen, die an der Dichtfläche des zweiten Maschinenelements anliegt. Die Abstreiflippe unterscheidet sich von der Sekundärdichtlippe im Wesentlichen bezüglich der Kontaktflächenwinkel ihrer Dichtkante. Bei der Abstreiflippe ist der niederdruckseitige Kontaktflächenwinkel größer, als der hochdruckseitige Kontaktflächenwinkel. Bei der Sekundärdichtlippe ist der hochdruckseitige Kontaktflächenwinkel größer als der niederdruckseitige Kontaktflächenwinkel. Der Stützring weist dabei bevorzugt eine der Niederdruckseite N zuweisende zweite Seitenflanke auf, die zur Niederdruckseite hin zumindest abschnittsweise konvex oder zur Bewegungsachse unter einem spitzen Winkel schräg verlaufend angeordnet ist. Die Sekundärdichtlippe bzw. Abstreiflippe liegt dabei an der zweiten Seitenflanke des Stützrings vorteilhaft unmittelbar an und ist an dieser hochdruckseitig abgestützt. Im Fall einer Sekundärdichtlippe kann die Dichtung im Sinne einer Tandemdichtung einen besonders zuverlässigen Schutz gegenüber einem unerwünschten Übertritt eines auf der Hochdruckseite angeordneten Fluids auf die Niederdruckseite realisiert werden. Im Falle einer Abstreiflippe kann insbesondere bei einer translatorischen Relativbewegung der beiden Maschinenelemente entlang der Bewegungsachse ein unerwünschter Eintritt von Verunreinigungen wie Schmutzpartikeln, Wasser etc. auf die Hochdruckseite des Dichtspalts entgegengewirkt werden.

Die Sekundärdichtlippe bzw. Abstreiflippe liegt nach der Erfindung vorzugsweise über einen Großteil, bevorzugt über mehr als 80%, ihrer an der zweiten Seitenflanke des Stützrings unmittelbar an und ist an dieser abgestützt. Dadurch kann im Falle einer translatorischen Relativbewegung der beiden Maschinenelemente ein unerwünschtes Umschlagen der Abstreif- bzw. Dichtlippe und damit einem Funktionsverlust derselben entgegengewirkt werden. Darüber hinaus kann die Sekundärdichtlippe (bzw. auch die Abstreiflippe) selbst bei einer Druckumkehr im Dichtspalt, d.h. einer Druckbeaufschlagung der Niederdruckseite mit einem gegenüber dem auf der Hochdruckseite herrschenden Betriebsdruck größeren Druck, eine Dichtfunktion ausüben.

Die Primärdichtlippe bzw. die Abstreiflippe/Sekundärdichtlippe der Dichtung kann/können jeweils mit einem elastisch verformbaren Vorspannelement versehen sein, mittels dessen die jeweilige die Primärdichtlippe bzw. die Sekundärdichtlippe/-abstreiflippe gegen die Dichtfläche des zweiten Maschinenelements vorgespannt ist. Dadurch kann die Dicht- bzw. Abstreiffunktion der Bauteile weiter erhöht werden. Das elastisch verformbare Vorspannelement kann ein Elastomer- oder Gummiring bzw. eine Wurmfeder oder dergleichen sein.

Die Dichtung ist einstückig ausgeführt. Dies bietet fertigungstechnische Vorteile und erlaubt eine besonders einfache Montage und Wartung der Dichtungsanordnung.

Zwischen der der Dichtung und dem ersten Maschinenelement ist eine Spannscheibe aus einem elastisch verformbaren Material angeordnet, die am ersten Maschinenelement unmittelbar statisch dichtend anliegt. Die Spannscheibe besteht vorzugsweise aus einem Elastomer oder aus Gummi. Bei dieser Bauart kann selbst bei Einsatz eines für statische Dichtungszwecke weniger geeigneten Materials der Dichtung eine zuverlässige Abdichtung des Dichtspalts gegenüber dem ersten Maschinenelement erreicht werden.

Die Dichtung ist durch die Spannscheibe zumindest abschnittsweise in radialer und in axialer Richtung gegen den Stützring gespannt. Die Spannscheibe weist in diesem Fall also eine Doppelfunktion als ein Spann- oder Halteelement auf. Dadurch kann die Montage der Dichtung bzw. Dichtungsanordnung weiter vereinfacht werden. So kann die Dichtung am Stützring vor einem Einbau der Dichtung in die Dichtungsanordnung bereits mittels der Spannscheibe am Stützring fixiert und so eine gemeinsam handhabbare Montage- bzw. Dichteinheit bereitgestellt werden.

Die Dichtung kann nach der Erfindung insbesondere aus einem zähelastischen Material, insbesondere aus Polytetrafluoräthylen (PTFE) oder einem PTFE-Compound, bestehen. Dadurch können zwischen der Dichtung und dem zweiten Maschinenelement auftretende Reibkräfte geringgehalten werden.

Der Stützring kann nach der Erfindung aus Metall bzw. einer Metalllegierung, insbesondere aus Stahl oder Bronze, aus einem Duroplasten, einem Thermoplast oder aus einem keramischen Material bestehen.

Die Erfindung wird nachfolgend anhand von in der Zeichnung wiedergegebenen Ausführungsbeispielen näher erläutert. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen
- Fig. 1: eine Dichtungsanordnung mit als Radialdichtring ausgeführten Dichtung, die in axialer und in radialer Richtung an einem Stützring abgestützt ist;
- Fig. 2: eine Dichtungsanordnung mit einem als Radialdichtring ausgeführten Dichtung, die zusätzlich zu einer Primärdichtlippe eine niederdruckseitig angeordnete Sekundärdichtlippe bzw. Abstreiflippe aufweist, in einer ausschnittsweisen Schnittdarstellung.
- Fig. 3: eine Dichtungsanordnung, bei der der Stützring dichtflächenseitig eine Vertiefung aufweist, die als Schmier- oder Trennmittelreservoir dient;
- Fig. 4: eine Dichtungsanordnung, bei der der Stützring dichtflächenseitig mit Tribostrukturen für ein verbessertes Rückschleppverhalten der Dichtungsanordnung versehen ist, in einer ausschnittsweisen Schnittdarstellung;
- Fig. 5: eine Dichtungsanordnung, bei der das Dichtungselement alleinig aufgrund des seinem Material innewohnenden elastischen Rückstellvermögens an der Dichtfläche des zweiten Maschinenelements anliegt, wobei die Dichtung zusätzlich durch den Stützring an dem ersten Maschinenelement vorgespannt (statisch) dichtend anliegt, in einer ausschnittsweisen Schnittdarstellung;
- Fig. 6: eine Dichtungsanordnung, bei der der Stützring eine hemisphärische oder im Wesentlichen hemisphärische Querschnittsform aufweist, in einer ausschnittsweisen Schnittdarstellung;
- Fig. 7: eine Dichtungsanordnung, bei der die Dichtung mittels einer Spannscheibe am Stützkörper in axialer und radialer Richtung gehalten angeordnet ist, wobei die Spannscheibe aus einem gummielastisch verformbaren Material besteht und mittels des Stützrings in radialer Richtung am ersten Maschinenelement in radialer Richtung vorgespannt und statisch dichtend anliegt, in einer ausschnittsweisen Schnittdarstellung;
- Fig. 8: eine zu der Dichtungsanordnung gemäß Fig. 7 ähnliche Dichtungsanordnung, in einer ausschnittsweisen Schnittdarstellung;
- Fig. 9: eine Dichtungsanordnung, bei der der Stützring spitz zulaufende Profilvorsprünge aufweist, die sich in das Material der Dichtung einkrallen, in einer ausschnittsweisen Schnittdarstellung;
- Fig. 10: eine Dichtungsanordnung, bei der die Dichtung zweiteilig ausgeführt ist, wobei der Stützring einen zentralen Vorsprung aufweist, der sich in das Material der gummielastisch verformbaren Spannscheibe lokal komprimert, in einer ausschnittsweisen Schnittdarstellung;
- Fig. 11: eine Dichtungsanordnung, bei der die Dichtung als ein Axialdichtring ausgeführt ist, in einer ausschnittsweisen Schnittdarstellung; und
- Fig. 12: ein Blockdiagramm mit einzelnen Verfahrensschritten eines Verfahrens zur Herstellung einer Dichtungsanordnung gemäß Fig. 7.

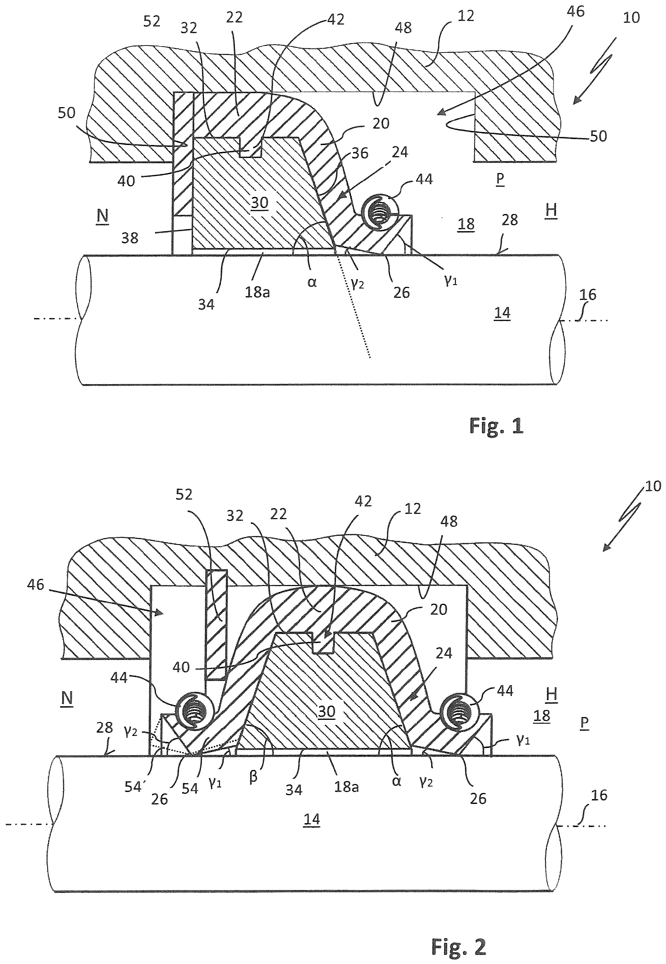

**Fig. 1** zeigt eine Dichtungsanordnung **10** mit einem ersten und mit einem zweiten Maschinenelement **12, 14** die um oder entlang einer mit **16** bezeichneten Bewegungsachse relativ zueinander bewegbar sind. Zwischen den beiden Maschinenelementen 12, 14 ist ein Dichtspalt **18** ausgebildet. Zum Abdichten einer mit einem Fluid druckbeaufschlagbaren Hochdruckseite **H** des Dichtspalts 18 gegenüber einer Niederdruckseite **N** des Dichtspalts dient eine Dichtung **20.** Die Dichtung 20 ist hier rein beispielhaft in radialer Richtung (dynamisch) innendichtend ausgeführt und umfasst einen Halteabschnitt **22** mit einer Primärdichtlippe **24,** die sich von dem Halteabschnitt 22 hochdruckseitig, hier in einer radialen Richtung, wegerstreckt. Es versteht sich, dass die Dichtung 20 auch in radialer Richtung außendichtend ausgeführt sein kann. Die Primärdichtlippe 24 weist einenends eine Dichtkante **26** auf, über die die Primärdichtlippe 24 des Dichtrings 20 an einer Dichtfläche **28** des zweiten Maschinenelements 14 dynamisch dichtend anliegt. Kontaktflächenwinkel der Dichtkante sind mit **γ₁, γ₂** bezeichnet. Der zur Hochdruckseite offene Kontaktflächenwinkel γ₁ ist größer, als der zur Niederdruckseite hin offene Kontaktflächenwinkel γ₂. Die Dichtung 20 kann ganz oder teilweise aus einem gummielastisch verformbaren Material, insbesondere einem Elastomer, oder einem zähelastisch verformbaren Material wie beispielsweise Polytetrafluorethylen (PTFE) oder einem PTFE-Compound bestehen.

Die Dichtungsanordnung 10 umfasst ferner einen Stützring **30.** Der Stützring 30 weist ein im Vergleich zum Material der Dichtung 20 großes Modul auf. Mit anderen Worten ist der Stützring 30 in sich biegesteif und gegenüber Kräften, die während eines Betriebseinsatzes der Dichtungsanordnung 10 am Stützring 30 angreifen, formstabil. Der Stützring 30 kann diesbezüglich insbesondere aus Metall, beispielsweise Bronze oder Stahl, aber auch aus einem Duroplast bzw. einem Thermoplast bestehen. Auch kann der Stützring 30 aus einer technischen Keramik bestehen.

Der Stützring 30 weist eine dem ersten Maschinenelement 12 zuweisende erste Seite **32** und eine dem zweiten Maschinenelement 14, d. h. dessen Dichtfläche 28, zuweisende zweite Seite **34** auf. Die erste Seite 32 entspricht hier der radial äußeren Umfangsfläche und die zweite Seite der radial inneren Umfangsfläche des Stützrings 30. Der Stützring 30 kann gemäß Fig. 1 von der Dichtfläche 28 des zweiten Maschinenelements 14 (im Normalbetrieb) geringfügig beabstandet angeordnet sein. Der Stützring weist in diesem Fall einen im Vergleich zum Außendurchmesser des zweiten Maschinenelements größeren Innendurchmesser auf (nicht bezeichnet). Der Dichtspalt 18 ist in diesem Fall mithin zwischen der zweiten Seite 34 des Stützrings 30 und der Dichtfläche 28 auf einen geringen Freiraum 18a reduziert. Der Freiraum 18a erstreckt sich parallel zur Dichtfläche 28 über die gesamte Breite des Stützrings 30. Unter einem Freiraum 18a ist ein solches Raumvolumen zu verstehen, in dem kein Bauteil der Dichtungsanordnung 10 angeordnet ist.

Der Stützring 30 weist im Querschnitt eine zur Hochdruckseite H weisende ersten Seitenflanke **36** und einer der Niederdruckseite N zuweisende zweite Seitenflanke **38** auf. Die erste Seitenflanke 36 ist relativ zur Dichtfläche 28 des zweiten Maschinenelements schräg verlaufend angeordnet und schließt mit der Dichtfläche 28 bzw. der Bewegungsachse 16 einen zur Niederdruckseite N hin offenen Winkel α ein. Die Primärdichtlippe 24 der Dichtung 20 liegt an der ersten Seitenflanke 36 des Stützrings 30 unmittelbar an und ist an dieser in Richtung der Niederdruckseite N abgestützt. Die zweite Seitenflanke kann gemäß Fig. 1 zur Dichtfläche 28 ungefähr orthogonal verlaufend angeordnet sein.

Der Halteabschnitt 22 der Dichtung 20 ist zwischen dem Stützring 30 und dem ersten Maschinenelement 12 im (radialen) Presssitz gehalten angeordnet und liegt an dem ersten Maschinenelement 12 unmittelbar statisch dichtend an. Zur Lagefixierung der Dichtung 20 relativ zum Stützring 30 weist die Dichtung 20 mehrere Profilvorsprünge **40** auf. Die Profilvorsprünge 40 greifen jeweils in eine dazu korrespondierende Ausnehmung **42** des Stützrings 30 ein. Die Profilvorsprünge 40 können an der ersten Seite 32 oder an der ersten Seitenflanke 36, des Stützrings 30 angeordnet sein.

Die Profilvorsprünge 40 sowie die dazu korrespondierenden Ausnehmungen 42 des Stützrings 30 sind in Umfangsrichtung des Stützrings 30 bzw. der Dichtung voneinander beabstandet aufgereiht angeordnet. Durch diesen gegenseitigen Eingriff der Dichtung 20 und des Stützrings 30 kann die Montage der Dichtung vereinfacht und ein unerwünschtes Abrutschen der Dichtung 20 vom Stützring 30 während des Betriebseinsatzes vermieden werden. Darüber hinaus kann dadurch die Dichtung 20 am Stützring 30 drehfest festgelegt werden.

Die Profilvorsprünge 40 der Dichtung können in der jeweiligen Ausnehmung 42 des Stützrings 30 formschlüssig bzw. im Presssitz gehalten angeordnet sein. Es versteht sich, dass alternativ oder zusätzlich auch der Stützring 30 mit derlei Profilvorsprüngen 40 versehen sein kann, die in dazu korrespondierende Ausnehmungen der Dichtung 20 eingreifen. Der Stützring 30 und die Dichtung können, etwa im Bereich der Profilvorsprünge/Ausnehmungen, bedarfsweise miteinander verklebt sein.

Der Stützring 30 dient einer Führung, Stabilisierung und einem Schutz der Dichtung 20 vor einer mechanischen bzw. thermischen Überbeanspruchung während des Betriebseinsatzes. Einerseits ist durch den Stützring 30 eine zuverlässige Abstützung und damit ein Verformungsschutz der Primärdichtlippe 24 bei Druckbeaufschlagung der Hochdruckseite H mit einem Betriebsdruck **P** gewährleistet. Die Primärdichtlippe 24 der Dichtung 20 liegt dabei vorteilhaft über einen Großteil, bevorzugt mehr als 80%, ihrer Längserstreckung an der ersten Seitenflanke 36 des Stützrings 30 an. Durch die in axialer sowie in radialer Richtung verlaufend angeordnete Primärdichtlippe 24 kann diese eine kleinere Exzentrizität der beiden Maschinenelemente 12, 14 begrenzt ausgleichen bzw. kompensieren, ohne dass es dadurch zu einer Beeinträchtigung der Dichtfunktion der Dichtung 20 kommt. Durch den Stützring 30 kann dabei einer übermäßigen Kontaktflächenpressung der Dichtung 20 bzw. der Dichtkante 26 und der Dichtfläche 28 entgegengewirkt werden. Weist z. B. das die Dichtfläche 28 aufweisende zweite Maschinenelement 14 eine Exzentrizität auf, so kann die Dichtfläche 28 am Stützring 30 anschlagen und diesen in radialer Richtung mitnehmen. Durch die von der Niederdruckseite N in Richtung auf die Hochdruckseite H zur Dichtfläche schräg verlaufend ausgeführte erste Seitenflanke 36 kann die Primärdichtlippe 24 ihrerseits vom Stützring (abschnittsweise) 30 in radialer Richtung zuverlässig mitgenommen und im Bereich ihrer Dichtkante 26 entlastet werden.

Die Primärdichtlippe 24 kann mit ihrer Dichtkante 26 mittels eines elastisch verformbaren Vorspannelements **44** gegen die Dichtfläche 28 des zweiten Maschinenelements 14 vorgespannt sein. Das Vorspannelement 44 kann dabei gemäß Fig. 1 als eine Wurmfeder oder alternativ als ein Elastomer- bzw. Gummiring ausgeführt sein.

Das erste Maschinenelement 12 kann eine Dichtungshaltestruktur in Form einer Haltenut **46** mit Nutboden **48** und zumindest einer Nutflanke **50** für die Dichtung 20 aufweisen. Im Falle einer radial dichtenden Dichtung 20 liegt der Halteabschnitt der Dichtung 20 somit in radialer Richtung am Nutboden 48 der Haltenut 46 statisch dichtend an. Die Dichtungsanordnung kann darüber hinaus einen an sich bekannten Sicherungsring **52** aufweisen.

**Fig. 2** zeigt eine weitere Dichtungsanordnung 10, die sich von dem in Fig. 1 gezeigten Ausführungsbeispiel im Wesentlichen darin unterscheidet, dass die Dichtung 20 eine Abstreiflippe **54** bzw. eine mit gestrichelter Linie dargestellte Sekundärdichtlippe **54'** aufweist. In den in der Zeichnung gezeigten weiteren Ausführungsbeispielen ist aus Darstellungsgründen einheitlich eine Abstreiflippe 54 gezeigt, die zugleich stellvertretend für die alternative Ausführungsform einer in Fig. 2 mit gestrichelter Linie dargestellten Sekundärdichtlippe 54' anzusehen ist. Die Abstreiflippe 54 unterscheidet sich von der Sekundärdichtlippe 54' bezüglich ihrer Kontaktflächenwinkel γ₁, γ₂. Bei der Abstreiflippe 54 ist der hochdruckseitige Kontaktflächenwinkel γ₁ kleiner, als der niederdruckseitige Kontaktflächenwinkel γ₂. Bei der Sekundärdichtlippe 54' ist der hochdruckseitige Kontaktflächenwinkel γ₁ größer, als der niederdruckseitige Kontaktflächenwinkel γ₂. Die Abstreiflippe 54 bzw. Sekundärdichtlippe 54' und die Primärdichtlippe 24 sind über den gemeinsamen Halteabschnitt 22 der Dichtung 20 einstückig miteinander verbunden. Die Primärdichtlippe 24 erstreckt sich hier vom Halteabschnitt 22 in einer radialen Richtung weg und liegt mit ihrer Dichtkante 26 an der Dichtfläche 28 des zweiten Maschinenelements 14 dynamisch dichtend an. Der Stützring 30 kann eine trapezartige Querschnittsform aufweisen. Die niederdruckseitige zweite Seitenflanke 38 des Stützrings 30 ist zur Dichtfläche 28 bzw. zur Bewegungsachse 16 schräg verlaufend angeordnet und schließt mit dieser einen zur Hochdruckseite H hin offenen Winkel β ein. Der Winkel β beträgt vorteilhaft zwischen 45° und 80°, bevorzugt ungefähr 70°. Der Winkel α und der Winkel β stimmen hier miteinander überein bzw. im Wesentlichen miteinander überein.

Die Primärdichtlippe 24 liegt an der ersten Seitenflanke 36 des Stützrings 30 unmittelbar an und ist an dieser niederdruckseitig in axialer sowie auch in radialer Richtung abgestützt. Die Abstreiflippe 54 bzw. Sekundärdichtlippe 54' liegt - in einer zur Primärdichtlippe 24 entsprechenden Weise über mehr als 80% ihrer Längserstreckung an der zweiten Seitenflanke 38 des Stützrings an und ist an dieser in radialer und in axialer Richtung (zur Hochdruckseite H hin) abgestützt. Die Primär- als auch Abstreif-/Sekundärdichtlippe 24, 54, 54' können jeweils mittels eines elastisch verformbaren Vorspanelements 44, hier einer Wurmfeder, an der Dichtfläche des zweiten Maschinenelements 14 vorgespannt (dynamisch) dichtend anliegen. Bei der in Fig. 2 gezeigten Dichtungsanordnung begrenzen die beiden Dichtlippen in axialer Richtung den Freiraum 18a. Dieser Freiraum 18a kann der als ein Schmiermittelreservoir oder dergleichen dienen.

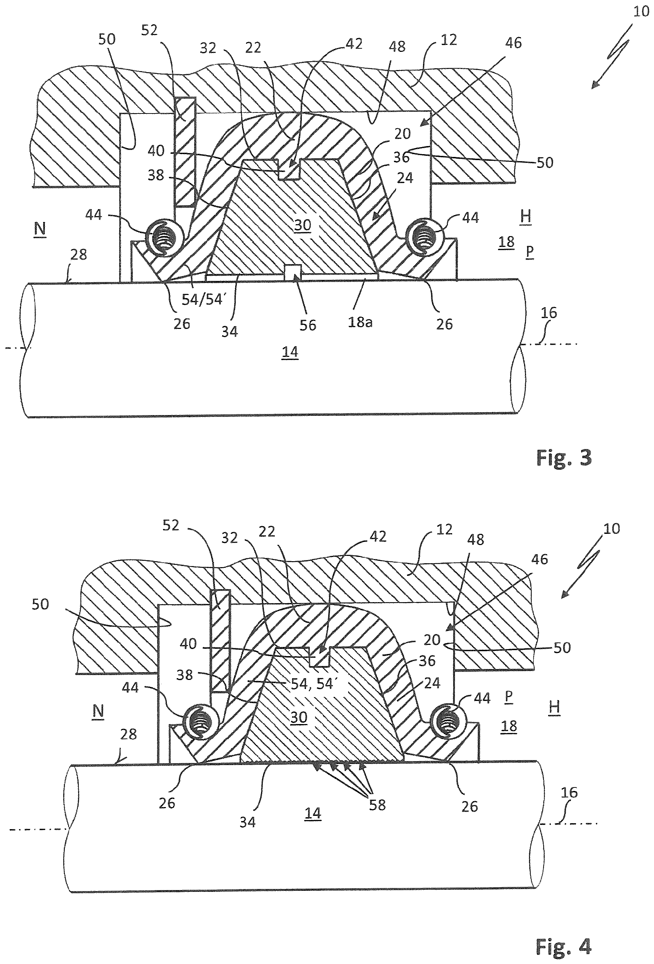

Der Stützring 30 kann an seiner dichtflächenseitigen zweiten Seite 34 gemäß **Fig. 3** eine oder mehrere Vertiefungen **56,** insbesondere Ringnuten aufweisen, die zur Dichtfläche 28 hin jeweils offen ausgeführt ist/sind. Jede Vertiefung 56 kann dabei als ein Reservoir für ein Schmiermittel bzw. ein flüssiges Dicht- bzw. Trennmittel (nicht gezeigt) dienen. Als Trennmittel kann beispielsweise ein Silikon Öl oder eine andere geeignete Flüssigkeit eingesetzt werden.

Der Stützring 30 der Dichtungsanordnung 10 kann gemäß dem in **Fig. 4** gezeigten Ausführungsbeispiel an der Dichtfläche 28 des zweiten Maschinenelements 14 anliegen. Im Falle einer in radialer Richtung dichtenden Dichtung liegt der Stützring in radialer Richtung und im Fall einer in axialer Richtung dichtenden Dichtung in axialer Richtung an der Dichtfläche des zweiten Maschinenelements 14 an. In jedem Fall stützt sich der Stützring 30 somit an der Dichtfläche 28 des zweiten Maschinenelements 14 ab.

Der Stützring 30 kann an seiner zweiten Seite, d. h. hier innenumfangsseitig, vorteilhaft Tribostrukturen **58** aufweisen, um dadurch das Rückschleppverhalten der Dichtungsanordnung 10 und damit das Schmierverhalten der Dichtungsanordnung 10 im dynamischen Kontaktflächenbereich des Dichtrings 20 und der Dichtfläche 2 zu verbessern. Zu beachten ist, dass der Stützring 30 die Dichtfläche 28 im Hinblick auf die Funktionalität der Tribostrukturen 58 nicht unmittelbar kontaktieren muss, wie dies in Fig. 4 beispielhaft gezeigt ist, auch wenn dadurch das Rückschleppverhalten der Dichtungsanordnung 10 nochmals weiter gesteigert werden kann. Die Tribostrukturen 58 können Vertiefungen, insbesondere Rillen, Nuten und dergleichen bzw. Erhebungen an der zweiten Seite des Stützrings 30 umfassen.

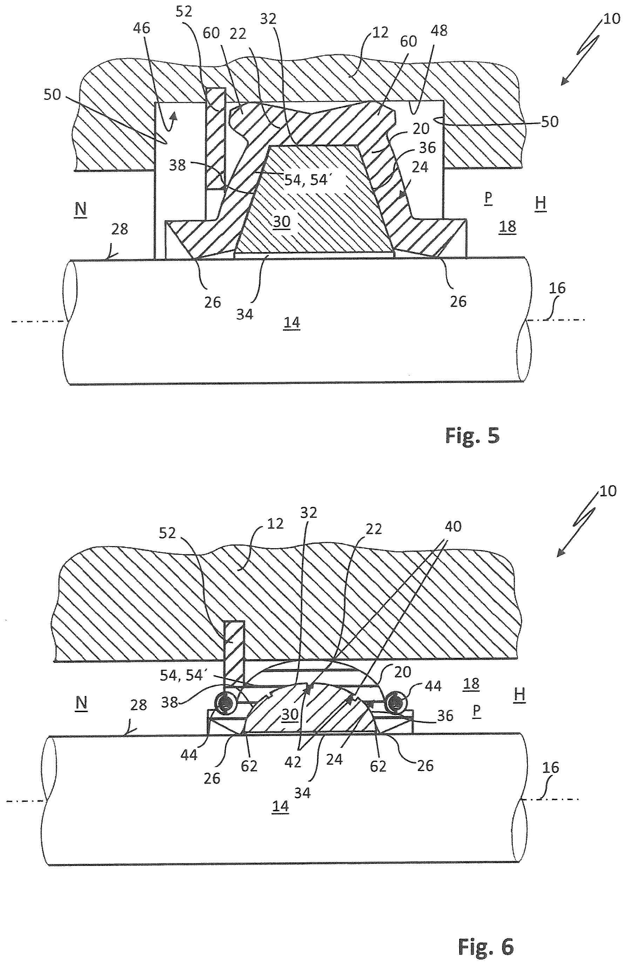

Die Dichtung 20 kann gemäß **Fig. 5** einen Halteabschnitt 22 mit zwei oder auch mehr Dichtwülsten **60** aufweisen, die sich vom Halteabschnitt in einer von der Dichtfläche wegweisenden Richtung wegerstrecken. Der Halteabschnitt der Dichtung kann über diese Dichtwülste 60 am ersten Maschinenelement, beispielsweise an einem Nutboden 48 der Haltenut 46, statisch dichtend anliegen. Der Dichtring 20 liegt hier mit seinen dynamischen Dichtkanten 26 sowie seinen Dichtwülsten 60 alleinig aufgrund einer seinem Material innewohnenden Eigenelastizität an der Dichtfläche 28 des zweiten Maschinenelements bzw. an dem ersten Maschinenelement 12 dichtend an. Es versteht sich, dass der Stützring 30 die Dichtfläche 28 auch in einer zu dem in Fig. 4 gezeigten Ausführungsbeispiel entsprechenden Weise kontaktieren kann.

Der Stützring 30 kann gemäß der in **Fig. 6** gezeigten Dichtungsanordnung 10 eine im Wesentlichen hemisphärische bzw. (halb-)kugelabschnittsförmigen Querschnittsform aufweisen. Der Stützring 30 weist in diesem Fall somit eine in Richtung der Breitenerstreckung des Stützrings 30 gekrümmt verlaufende erste Seite 32 mit (nach außen konvex) gekrümmtem Seitenflanken 36, 38 und eine der Dichtfläche 28 des zweiten Maschinenelements 14 zuweisende zweite Seite 34 auf. Die erste und die zweite Seite 32, 34 sind hier im Bereich von Kanten **62** des Stützrings 30 miteinander unmittelbar verbunden. Die Dichtung 20 kann auch bei dieser Ausführungsform durch zwei elastisch verformbare Vorspannelemente, etwa Wurmfedern oder Elastomer- bzw. Gummiringen, gegen die Dichtfläche 28 des zweiten Maschinenelements 14 gespannt sein.

Für eine Lagesicherung des Dichtrings 20 relativ zum Stützring 30 können auch hier Profilvorsprünge 40 des Stützrings 30 bzw. der Dichtung 20 dienen, die in dazu korrespondierende Ausnehmungen des jeweilig anderen Bauteils form- bzw. kraftschlüssig eingreifen. Diese Ausnehmungen 42 können im nicht-montierten Zustand im jeweiligen Bauteil bereits vorhanden sein.

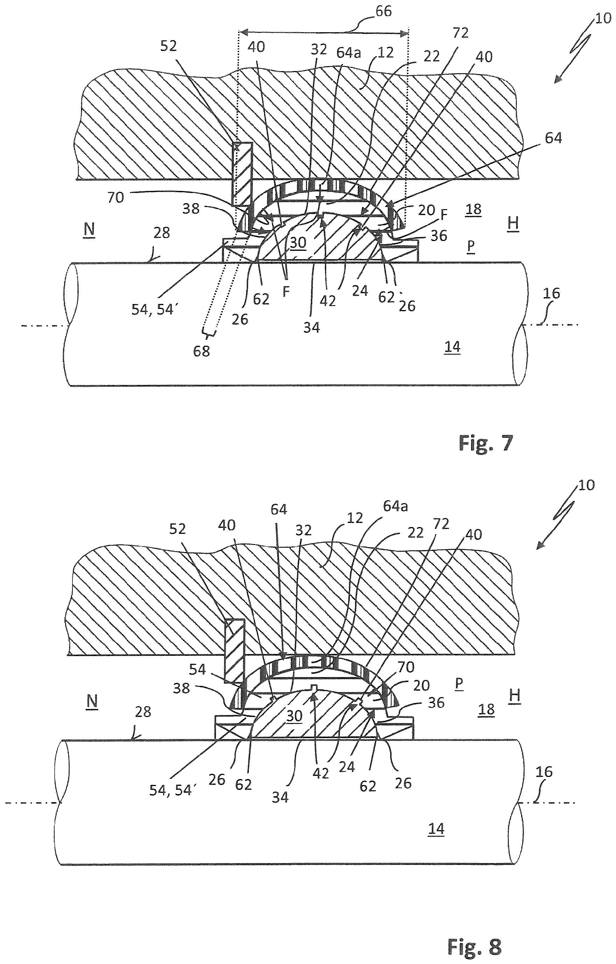

In **Fig. 7** ist eine Dichtungsanordnung 10 gezeigt, die sich von dem in Fig. 6 gezeigten Dichtungsanordnung 10 im Wesentlichen darin unterscheidet, dass zwischen dem ersten Maschinenelement 12 und der Dichtung 30 eine separat ausgebildete ring- bzw. hülsenförmige Spannscheibe **64** angeordnet ist. Die Spannscheibe 64 besteht hier aus einem gummielastisch verformbaren Material. Dies kann beispielsweise ein Elastomer oder Gummi sein. Es versteht sich, dass das Material der Spannscheibe 64 Füllstoffe oder andere Zuschlagstoffe aufweisen kann. Die Spannscheibe 64 weist eine (hier axiale) Breite **66** auf, die um ein Vielfaches größer ist, als die (hier radiale) Dicke **68** der Spannscheibe 64. Die Dicke 68 der Spannscheibe 64 ist vorteilhaft einheitlich oder im Wesentlichen einheitlich. Die Dicke 68 der Spannscheibe 64 kann jedoch auch bereichsweise variieren. Die Spannscheibe 64 weist eine der Dichtfläche 28 zuweisende Innenseite **70** und eine dem ersten Maschinenelement 12 zuweisende Außenseite **72** auf. Die Innenseite 70 der Spannscheibe 64 ist in axialer Richtung konkav ausgeführt. Die Außenseite 72 der Spannscheibe 64 ist in axialer Richtung konvex ausgeführt. Die Spannscheibe 64 liegt außenseitig mit ihrem Dichtabschnitt **64a** am ersten Maschinenelement 12 statisch dichtend an.

Die Spannscheibe 64 liegt zudem über ihre gesamte Breite 66 mit ihrer konkav ausgeformten Innenseite 70 an der Dichtung 20 außenseitig umlaufend (und auch dichtend) an. Die Spannscheibe 64 bildet somit für die Dichtung 20 eine formschlüssig anliegende Dichtkappe. Zwischen der Spannscheibe 64 und der Dichtung 20 existiert dabei Formschluss. Durch die Spannscheibe 64 ist die Dichtung 20 in radialer- sowie auch in axialer Richtung auf dem Stützring 30 festgespannt gehalten angeordnet. Die durch das Spannscheibe 64 auf die Dichtung einwirkenden Kräfte **F** sind in Fig. 7 mit Pfeilen grafisch verdeutlicht. Die Spannscheibe 64 hat mithin eine Doppelfunktion. Zum einen spannt sie die Dichtung 20 gegen die konvex gekrümmte erste Seite 32 und die beiden gekrümmten Seitenflanken 36, 38 des Stützrings 30, zum anderen ist durch die Spannscheibe 64 eine statische Abdichtung des ersten Maschinenteils 12 gegenüber der dynamisch wirkenden Dichtung 20 bewirkt.

Es versteht sich, dass auch bei dieser Bauart der Dichtungsanordnung 10 die Profilvorsprünge zur Lagefixierung der Dichtung am Stützring an der Dichtung 20 angeformt sein können, wie dies in **Fig. 8** gezeigt ist. Auch kann die der Dichtfläche 28 zuweisende zweite Seite 34 des Stützrings 30 mit einer als Schmier- oder Trennmittelreservoir dienenden Nut bzw. mit Tribostrukturen zur Schmiermittelrückförderung versehen sein.

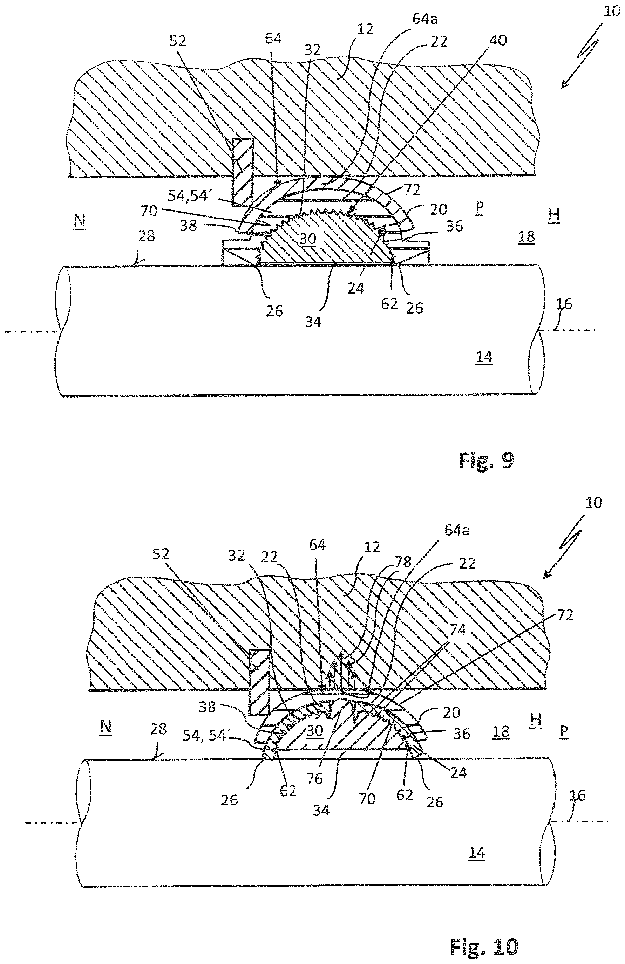

Eine unter konstruktiven und fertigungstechnisch vorteilhafte Ausführungsform der Dichtungsanordnung 10 ist in **Fig. 9** gezeigt. Hier sind am Stützring 30 eine Vielzahl von Profilvorsprüngen 40 angeformt. Die Profilvorsprünge 40 sind in Form von Krallelementen ausgeführt, die sich in das Material der Dichtung 20 einkrallen. Die Dichtung 20 weist hier vor der Montage der Dichtungsanordnung 10 keine Ausnehmungen für die Profilvorsprünge 40 des Stützrings auf. Die Profilvorsprünge 40 krallen sich bei der Montage vielmehr in das Material der Dichtung 20 verdrängend oder auch schneidend, d.h. lokal zerstörend, ein. Die Profilvorsprünge 40 weisen dazu vorzugsweise einen Querschnittverlauf auf, der sich in Richtung auf sein, vorzugsweise spitzes, freies Ende **74** verjüngt. Die Spannscheibe 64 liegt im Betriebszustand der Dichtungsanordnung 10 am ersten Maschinenelement 12 jederzeit statisch dichtend an.

Die Dichtung 20 kann analog zu der Darstellung in Fig. 5 in einer Haltenut 46 des ersten Maschinenelements 12 angeordnet sein und/oder mittels eines Sicherungsrings 52 am ersten Maschinenelement 12 in axialer Richtung zur Niederdruckseite N hin lagegesichert sein.

**Fig. 10** zeigt eine weitere Dichtungsanordnung 10, die sich von der in Fig. 9 gezeigten Dichtungsanordnung 10 im Wesentlichen darin unterscheidet, dass die Dichtung 20 hier zweiteilig ausgeführt ist. Die Dichtung 20 umfasst hier eine hochdruckseitig angeordnete Primärdichtlippe 24 und eine niederdruckseitig angeordnete Abstreif-/Sekundärdichtlippe 54, 54'. Die beiden Halteabschnitte 22 der Dichtung 20 sind in axialer Richtung voneinander beabstandet angeordnet. Der Stützring 30 weist im Bereich seines Scheitels einen Ringbund **76** auf. Der Ringbund 76 am Stützring 30 angeformt und vorzugsweise umlaufend geschlossenen ausgeführt. Der Ringbund 76 erstreckt sich bei der als Radialdichtung ausgeführten Dichtung 20 in radialer Richtung von der ersten Seite 32 des Stützrings 30 in Richtung auf das erste Maschinenelement 12 weg.

Dieser Ringbund 76 dient dazu, die Spannscheibe 64 in radialer Richtung gegen das erste Maschinenelement 12 vorzuspannen. Durch den Ringbund 76 wird die gummielastisch verformbare Spannscheibe 64 lokal im Bereich der komprimiert. Eine Kontaktflächenpressung **78** zwischen der Spannscheibe 64 und dem ersten Maschinenelement 12 ist deshalb im Bereich des den Ringbund 76 in radialer Richtung überdeckenden Dichtabschnitts 64a der Spannscheibe 64 am größten und nimmt zu beiden Seiten des Ringbunds 76 ab.

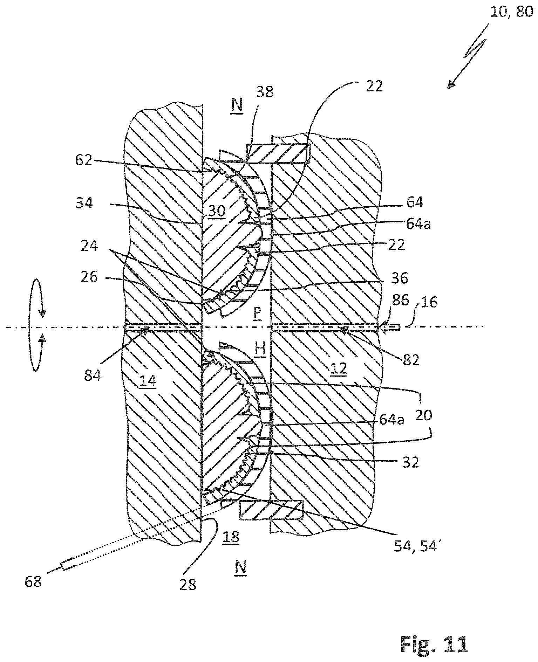

In **Fig. 11** ist eine Dichtungsanordnung 10 gezeigt, bei der die Dichtung 20 relativ zur Bewegungsachse 16 der beiden Maschinenelemente 12, 14 axialdichtend ausgeführt ist. Die beiden Maschinenelemente 12, 14 sind hier relativ zueinander um die Bewegungsachse 16 rotatorisch verstellbar. Die Dichtungsanordnung 10 kann gemäß Fig. 11 in Form einer Drehdurchführung **80** ausgeführt sein. Das erste und das zweite Maschinenelement 12, 14 weisen in diesem Fall jeweils einen Fluidkanal **82, 84** auf, die über die Hochdruckseite H des Dichtspalts 18 miteinander Fluidisch verbunden sind. Über den Fluidkanal 82 des ersten Maschinenelements ist hier ein Fluid **86,** etwa eine Flüssigkeit oder auch ein Gas/Gasgemisch, in den Fluidkanal 84 des zweiten Maschinenelements 14 einleitbar. Der Stützring 30 liegt hier mit seiner zweiten Seite 34 an der Dichtfläche 28 des zweiten Maschinenelements 14 in jedem Betriebszustand an. Die Dichtfläche 28 dient dem Stützring 30 dabei als Widerlager, so dass die Dichtung 20 und die Spannscheibe 64 zwischen dem Stützring 30 und dem ersten Maschinenelement 12 im axialen Presssitz gehalten angeordnet sind. Die Spannscheibe 64 liegt mit ihrem Dichtabschnitt 64a am ersten Maschinenelement 12 statisch dichtend an und ist an diesem drehfest festgesetzt.

Die Dichtung 20 der vorstehend im Zusammenhang mit den Figuren 1 bis 11 erläuterten Dichtungsanordnungen 10 kann insbesondere aus einem zähelastischen Material wie beispielsweise Polytetrafluorethylen (PTFE) bestehen. Die in den Figuren 7 bis 11 gezeigte Spannscheibe 64 besteht vorzugsweise aus einem Elastomer. Die Dichtung 20, der Stützring 30 und, sofern vorhanden, die Spannscheibe 64, können bedarfsweise in einer an sich bekannten Kartusche aus Metall oder einem anderen geeigneten Material angeordnet sein, die im Dichtspalt 16 positioniert ist.

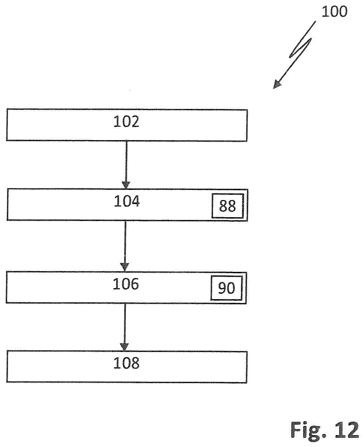

Nachfolgend wird das erfindungsgemäße Herstellungsverfahren **100** für eine Dichtungsanordnung 10 gemäß den Figuren 7 bis 11 unter zusätzlicher Bezugnahme auf **Fig. 12** erläutert.

In Schritt **102** wird die Spannscheibe 64 (Fig. 7) erzeugt, indem die Spannscheibe 64 von einem bereitgestellten gummielastischen Schlauch **88** gestochen bzw. freigeschnitten wird. In einem weiteren Schritt **104** wird die Dichtung 20 am Stützring 30 montiert bzw. aufgezogen. In einem weiteren Schritt **106,** der fakultativ auch zeitgleich mit dem Schritt 104 erfolgen kann, wird die Spannscheibe 64 unter einer elastischen Verformung der Spannscheibe 64 umfangsseitig auf der Dichtung 20 montiert, sodass diese an den Stützring 30 gepresst wird. Die Spannscheibe 64, die Dichtung 20 und der Stützring 30 bilden so eine gemeinsam handzuhabende und zu montierende Dichtungseinheit **90.** In einem weiteren Schritt **110** wird die Dichtungseinheit 90 im Dichtspalt 18 zwischen den beiden Maschinenelementen 12, 14 angeordnet.

## Patentansprüche

1. Dichtungsanordnung (10) umfassend:
- ein erstes und ein zweites Maschinenelement (12, 14), die unter Ausbildung eines zwischen den beiden Maschinenelementen (12, 14) angeordneten Dichtspalts (18) voneinander beabstandet und entlang/um eine Bewegungsachse (16) relativ zueinander bewegbar angeordnet sind,
- eine Dichtung (20) zum Abdichten einer mit einem Fluid druckbeaufschlagbaren Hochdruckseite H des Dichtspalts (18) gegenüber einer Niederdruckseite N des Dichtspalts (18); und
- einen Stützring (30) mit einer zur Hochdruckseite H weisenden ersten Seitenflanke (36), die zur Hochdruckseite H hin zumindest abschnittsweise konvex gekrümmt oder zumindest abschnittsweise relativ zur Bewegungsachse (16) der beiden Maschinenelemente (12, 14) unter einem spitzen Winkel α, β schräg verlaufend ausgebildet ist,
- wobei die Dichtung (20) einen Halteabschnitt (22) und zumindest eine Primärdichtlippe (24) aufweist, die sich von dem Halteabschnitt (22) hochdruckseitig wegerstreckt und welche an einer Dichtfläche (28) des zweiten Maschinenelements (14) dynamisch dichtend anliegt; wobei die Primärdichtlippe (24) niederdruckseitig über einen Großteil ihrer Längserstreckung an der ersten Seitenflanke (36) des Stützrings (30) unmittelbar anliegt und abgestützt ist,
wobei die Dichtung (20) eine Abstreif- oder Sekundärdichtlippe (54, 54') umfasst, die einenends an der Dichtfläche (28) des zweiten Maschinenelements (14) anliegt, wobei der Stützring (30) eine der Niederdruckseite N zuweisende zweite Seitenflanke (38) aufweist, die zur Niederdruckseite N hin konvex gekrümmt oder relativ zur Bewegungsachse (16) unter einem spitzen Winkel α, β schräg verlaufend ausgebildet ist und wobei die Abstreif- oder Sekundärdichtlippe (54, 54') an der zweiten Seitenflanke (38) des Stützrings (30) unmittelbar anliegt und abgestützt ist, **dadurch gekennzeichnet, dass** der Halteabschnitt (22) der Dichtung (20) zwischen dem Stützring (30) und dem ersten Maschinenelement (12) geklemmt gehalten angeordnet ist und am ersten Maschinenelement (12) mittelbar oder unmittelbar statisch dichtend anliegt,
der Stützring im Normalbetrieb der Dichtungsanordnung vom zweiten Maschinenelement beabstandet ist, wobei
die Dichtung einstückig ausgeführt ist, wobei
zwischen der Dichtung (20) und dem ersten Maschinenelement (12) eine Spannscheibe (64) aus einem elastisch verformbaren Material angeordnet ist, die am ersten Maschinenelement (12) statisch dichtend anliegt und wobei die Dichtung (20) durch die Spannscheibe (64) zumindest abschnittsweise in einer radialen und in einer axialen Richtung gegen den Stützring (20) gespannt ist.

2. Dichtungsanordnung nach Anspruch 1, **dadurch gekennzeichnet, dass** der Stützring (30) an seiner der Dichtfläche (28) des zweiten Maschinenelements (14) zuweisenden Seite (34) Tribostrukturen (58) aufweist.

3. Dichtungsanordnung nach Anspruch 1 oder 2, **dadurch gekennzeichnet, dass** der Stützring (30) an der Dichtfläche (28) des zweiten Maschinenelements (14) anliegt.

4. Dichtungsanordnung nach einem der vorhergehenden Ansprüche, **dadurch gekennzeichnet, dass** die Primärdichtlippe (24) der Dichtung (20) über mehr als 80% ihrer Längserstreckung an der ersten Seitenflanke (36) des Stützrings (30) anliegt und abgestützt ist.

5. Dichtungsanordnung nach einem der vorhergehenden Ansprüche, **dadurch gekennzeichnet, dass** der Stützring (30) oder die Dichtung (20) mit einem Profilvorsprung (40), bevorzugt mit mehreren Profilvorsprüngen (40), versehen ist, der/die sich vom Stützring (30) bzw. der Dichtung (20) weg und in eine zum Profilvorsprung (40) korrespondierende Ausnehmung (42) des jeweilig anderen Bauteils hinein erstreckt/erstrecken.

6. Dichtungsanordnung nach Anspruch 1, **dadurch gekennzeichnet, dass** die Abstreif-/Sekundärdichtlippe (54, 54') über einen Großteil ihrer Längserstreckung, bevorzugt über mehr als 80% ihrer Längserstreckung, an der zweiten Seitenflanke (38) des Stützrings (30) anliegt und abgestützt ist.

7. Dichtungsanordnung nach einem der vorhergehenden Ansprüche, **dadurch gekennzeichnet, dass** die Primärdichtlippe und/oder die Abstreif-/ Sekundärdichtlippe (54, 54') mittels eines zur Dichtung (20) separat ausgebildeten elastisch, bevorzugt gummielastisch, verformbaren Vorspannelements (44) an der Dichtfläche (28) des zweiten Maschinenelements (14) vorgespannt zur Anlage gebracht sind.

8. Dichtungsanordnung nach einem der vorhergehenden Ansprüche, **dadurch gekennzeichnet, dass** die Dichtung (20) aus einem zähelastischen Material, insbesondere aus Polytetrafluorethylen (PTFE) oder einem PTFE-Compound, besteht.

9. Dichtungsanordnung nach einem der vorhergehenden Ansprüche, **dadurch gekennzeichnet, dass** der Stützring (30) aus Metall, insbesondere aus Stahl oder Bronze, aus einem Duroplast, einem Thermoplast oder aus einem keramischen Material besteht.

## Claims

1. Seal assembly (10), comprising:
- a first and a second machine element (12, 14) which are spaced apart from one another, forming a seal gap (18) arranged between the two machine elements (12, 14), and are arranged so as to be movable relative to one another along/about a movement axis (16),
- a seal (20) for sealing a high-pressure side H of the seal gap (18), which can be pressurized with a fluid, with respect to a low-pressure side N of the seal gap (18); and
- a support ring (30) comprising a first lateral flank (36) facing the high-pressure side H, which lateral flank is convexly curved at least in portions toward the high-pressure side H or, at least in portions, is designed to extend obliquely at an acute angle α, β relative to the movement axis (16) of the two machine elements (12, 14),
- the seal (20) having a holding portion (22) and at least one primary sealing lip (24) which extends away from the holding portion (22) on the high-pressure side and which abuts a sealing surface (28) of the second machine element (14) in a dynamically sealing manner;
the primary sealing lip (24) directly abutting and being supported on the first lateral flank (36) of the support ring (30) over the majority of the longitudinal extension thereof on the low-pressure side,
the seal (20) comprising a wiper lip or secondary sealing lip (54, 54') which at one end abuts the sealing surface (28) of the second machine element (14), the support ring (30) having a second lateral flank (38) facing the low-pressure side N, which lateral flank is convexly curved toward the low-pressure side N or is designed to extend obliquely at an acute angle α, β relative to the movement axis (16), and the wiper lip or secondary sealing lip (54, 54') directly abutting and being supported on the second lateral flank (38) of the support ring (30), **characterized in that** the holding portion (22) of the seal (20) is held clamped between the support ring (30) and the first machine element (12) and directly or indirectly abuts the first machine element (12) in a statically sealing manner, and the support ring is spaced apart from the second machine element during normal operation of the seal assembly,
the seal being made in one piece,
a clamping disc (64) made of an elastically deformable material being arranged between the seal (20) and the first machine element (12), which clamping disc abuts the first machine element (12) in a statically sealing manner, and the seal (20) being clamped, at least in portions, against the support ring (20) in a radial and in an axial direction by the clamping disc (64).

2. Seal assembly according to claim 1, **characterized in that** the support ring (30) has tribo structures (58) on the face thereof (34) facing the sealing surface (28) of the second machine element (14).

3. Seal assembly according to either claim 1 or claim 2, **characterized in that** the support ring (30) abuts the sealing surface (28) of the second machine element (14).

4. Seal assembly according to any of the preceding claims, **characterized in that** the primary sealing lip (24) of the seal (20) abuts and is supported on the first lateral flank (36) of the support ring (30) over more than 80% of the longitudinal extension thereof.

5. Seal assembly according to any of the preceding claims, **characterized in that** the support ring (30) or the seal (20) is provided with a profile projection (40), preferably with a plurality of profile projections (40), which extend(s) away from the support ring (30) or the seal (20) and into a recess (42) of the relevant other component that corresponds to the profile projection (40).

6. Seal assembly according to claim 1, **characterized in that** the wiper/secondary sealing lip (54, 54') abuts and is supported on the second lateral flank (38) of the support ring (30) over the majority of the longitudinal extension thereof, preferably over more than 80% of the longitudinal extension thereof.

7. Seal assembly according to any of the preceding claims, **characterized in that** the primary sealing lip and/or the wiper/secondary sealing lip (54, 54') are brought into contact with the sealing surface (28) of the second machine element (14) in a preloaded manner by means of an elastically, preferably rubber-elastically, deformable preloading element (44) formed separately from the seal (20).

8. Seal assembly according to any of the preceding claims, **characterized in that** the seal (20) consists of a tough-elastic material, in particular polytetrafluoroethylene (PTFE) or a PTFE compound.

9. Seal assembly according to any of the preceding claims, **characterized in that** the support ring (30) consists of metal, in particular steel or bronze, a thermoset, a thermoplastic or a ceramic material.

## Revendications

1. Dispositif d'étanchement (10) comprenant :
- des premier et second éléments de machine (12, 14) qui sont agencés à distance l'un de l'autre, en formant un interstice d'étanchement (18) interposé entre les deux éléments de machine (12, 14), et sont doués de mobilité relative le long/autour d'un axe de mouvement (16),
- une garniture d'étanchement (20) conçue pour assurer l'étanchéité d'un côté haute pression H de l'interstice d'étanchement (18), pouvant être soumis à la pression d'un fluide, par rapport à un côté basse pression N dudit interstice d'étanchement (18) ; et
- une bague d'appui (30) munie d'un premier flanc (36) qui pointe vers le côté haute pression H et présente une réalisation à courbure convexe au moins par zones, en direction dudit côté haute pression H, ou s'étendant à l'oblique, au moins par zones, en décrivant un angle aigu α, β par rapport à l'axe de mouvement (16) des deux éléments de machine (12, 14),
- la garniture d'étanchement (20) étant dotée d'un tronçon de maintien (22), et d'au moins une lèvre (24) d'étanchement primaire qui s'étend à partir dudit tronçon de maintien (22), côté haute pression, et est en applique contre une surface d'étanchement (28) du second élément de machine (14), avec effet d'étanchement dynamique ; sachant que
ladite lèvre (24) d'étanchement primaire est directement en applique et en appui, côté basse pression, contre le premier flanc (36) de la bague d'appui (30) sur une grande partie de son étendue longitudinale,
sachant que ladite garniture d'étanchement (20) inclut une lèvre (54, 54') de raclement ou d'étanchement secondaire en applique, par une extrémité, contre ladite surface d'étanchement (28) du second élément de machine (14), ladite bague d'appui (30) étant pourvue d'un second flanc (38) qui pointe vers le côté basse pression N et présente une réalisation à courbure convexe en direction dudit côté basse pression N, ou s'étendant à l'oblique en décrivant un angle aigu α, P par rapport à l'axe de mouvement (16), et sachant que ladite lèvre (54, 54') de raclement ou d'étanchement secondaire est directement en applique et en appui contre ledit second flanc (38) de la bague d'appui (30), **caractérisé par le fait que**
le tronçon de maintien (22) de la garniture d'étanchement (20) est agencé avec retenue par coincement entre la bague d'appui (30) et le premier élément de machine (12), et est indirectement ou directement en applique contre ledit premier élément de machine (12), avec effet d'étanchement statique,
laquelle bague d'appui est située à distance du second élément de machine en mode fonctionnement normal du dispositif d'étanchement, sachant que la garniture d'étanchement est de réalisation monobloc, sachant qu'une rondelle de serrage (64) en un matériau élastiquement déformable, interposée entre la garniture d'étanchement (20) et le premier élément de machine (12), est en applique contre ledit premier élément de machine (12) avec effet d'étanchement statique, et sachant que ladite garniture d'étanchement (20) est bloquée contre ladite bague d'appui (30), au moins par zones, dans des directions radiale et axiale.

2. Dispositif d'étanchement selon la revendication 1, **caractérisé par le fait que** la bague d'appui (30) est munie de tribostructures (58) sur son côté (34) pointant vers la surface d'étanchement (28) du second élément de machine (14).

3. Dispositif d'étanchement selon la revendication 1 ou 2, **caractérisé par le fait que** la bague d'appui (30) est en applique contre la surface d'étanchement (28) du second élément de machine (14).

4. Dispositif d'étanchement selon l'une des revendications précédentes, **caractérisé par le fait que** la lèvre (24) d'étanchement primaire de la garniture d'étanchement (20) est en applique et en appui, sur plus de 80 % de son étendue longitudinale, contre le premier flanc (36) de la bague d'appui (30).

5. Dispositif d'étanchement selon l'une des revendications précédentes, **caractérisé par le fait que** la bague d'appui (30) ou la garniture d'étanchement (20) est dotée d'une protubérance profilée (40), préférentiellement de plusieurs protubérances profilées (40) qui s'étend(ent), respectivement, à partir de ladite bague d'appui (30) ou de ladite garniture d'étanchement (20) et qui pénètre(nt) dans un évidement (42) de l'autre partie structurelle considérée, concordant avec ladite protubérance profilée (40).

6. Dispositif d'étanchement selon la revendication 1, **caractérisé par le fait que** la lèvre (54, 54') de raclement/d'étanchement secondaire est en applique et en appui sur une grande partie de son étendue longitudinale, de préférence sur plus de 80 % de son étendue longitudinale, contre le second flanc (38) de la bague d'appui (30).

7. Dispositif d'étanchement selon l'une des revendications précédentes, **caractérisé par le fait que** la lèvre d'étanchement primaire, et/ou la lèvre (54, 54') de raclement/d'étanchement secondaire, est (sont) mise(s) en applique avec précontrainte, contre la surface d'étanchement (28) du second élément de machine (14), au moyen d'un élément de précontrainte (44) réalisé distinctement de la garniture d'étanchement (20) et déformable élastiquement, de préférence avec l'élasticité du caoutchouc.

8. Dispositif d'étanchement selon l'une des revendications précédentes, **caractérisé par le fait que** la garniture d'étanchement (20) consiste en un matériau viscoélastique, notamment en du polytétrafluoréthylène (PTFE) ou en un composé de PTFE.

9. Dispositif d'étanchement selon l'une des revendications précédentes, **caractérisé par le fait que** la bague d'appui (30) consiste en du métal, notamment en de l'acier ou du bronze, en une matière thermodurcissable, en une matière thermoplastique ou en un matériau céramique.
